# EUROPEAN PATENT APPLICATION

(11) **EP 4 163 522 A1**
(43) Date of publication of application: **12.04.2023**
(21) Application number: 21821229.8
(22) Date of filing: 07.06.2021
(51) Int. Cl.: F16J 15/18, F16J 15/3272

(54) **SEALING STRUCTURE**

(30) Priority: 09.06.2020 JP 2020100488
(71) Applicant: NOK Corporation, Minato-ku Tokyo 105-8585 (JP)
(72) Inventor: HATANO, Makoto, Kitaibaraki-shi, Ibaraki 319-1535 (JP); WATANABE, Hideya, Kitaibaraki-shi, Ibaraki 319-1535 (JP); SEKI, Masatoshi, Kitaibaraki-shi, Ibaraki 319-1535 (JP)
(74) Representative: TBK
(86) International application number: PCT/JP2021/021503
(87) International publication number: WO 2021/251319

(57) **Abstract**

Generation of a space between an inner peripheral surface of a shaft hole and an outer peripheral surface of a seal ring is suppressed. A sealing structure (1) is a sealing device to seal an annular space between a shaft (50) and a shaft hole (61) into which the shaft (50) is inserted. The sealing structure (1) includes an annular seal ring (2) around an axis line x attached to a groove (51) of the shaft (50), and a locked portion (3) formed on a bottom surface (52) of the groove (51) of the shaft (50). The seal ring (2) has a locking portion (4) formed on an inner peripheral surface (21). The locking portion (4) and the locked portion (3) are formed so as to be lockable with each other and formed such that the seal ring (2) is pressed toward an outer periphery side when the locking portion (4) and the locked portion (3) are locked with each other.

## Description

### Technical Field

The present invention relates to a sealing structure to seal a space between a shaft and a shaft hole into which the shaft is inserted, and particularly relates to a structure between a seal ring and a groove of the shaft.

### Background Art

In an automatic transmission (AT), a continuously variable transmission (CVT), or the like of a vehicle, a sealing device has conventionally been used to prevent leakage of an operating oil for use in controlling the hydraulic pressure. A seal ring is among such sealing devices, and the seal ring is used to seal a gap between a shaft and a shaft hole into which the shaft is inserted. Specifically, the seal ring is attached to a groove formed on an outer peripheral surface of the shaft and contacts a side surface of the groove and an inner peripheral surface of the shaft hole so as to seal the space between the shaft and the shaft hole, thereby maintaining the hydraulic pressure of the operating oil between the shaft and the shaft hole.

The seal ring is not endless, but is divided, and the divided portions are provided with joint portions. The joint portions are formed so as to contact each other in a usage state to eliminate a space in the joint portions, and the seal ring is structured to seal the gap also in the joint portions in the usage state (see, for example, Patent Literature 1).

### Document List

### Patent Literature

Patent Literature 1: Japanese Patent Application Publication No. 2016-14481

### Summary of Invention

### Technical Problem

Some seal rings are used in a speed reducer of a motor mechanism of an electric vehicle (EV) or a hybrid electric vehicle (HEV), and the seal rings prevent leakage of oil for cooling in the speed reducer. The hydraulic pressure of the oil for cooling in such a speed reducer is a minute or no pressure, and the hydraulic pressure applied to the seal ring is lower than the hydraulic pressure applied to the seal ring used for sealing the operating oil that has a high pressure in the AT or the like.

Some seal rings used under such an environment with a low-pressure in the speed reducer or the like are formed through injection molding using a resin material. In some manufacturing using the injection molding, the seal ring is molded in a state with a joint portion expanded at the time of injection molding, and thereafter, the seal ring is corrected (diameter is reduced) so as to have a desired diameter. In such a correction, it is difficult to correct the joint portion or the vicinity of the joint portion, and in particular, when a rigid resin such as PEEK (polyether ether ketone) or PPS (poly phenylene sulfide) is used as the resin material, it is difficult to perform correction to realize a desired diameter.

If through such a correction, the joint portion or the vicinity of the joint portion cannot be corrected to realize a desired diameter, the roundness of the seal ring in a usage state becomes insufficient, so that a space is formed between the inner peripheral surface of the shaft hole and the outer peripheral surface of the seal ring. When the seal ring is used in the AT or the like, the seal ring is pressed against the inner peripheral surface of the shaft hole due to the hydraulic pressure of a high-pressure operating oil applied, so that the space on the outer periphery side due to the insufficient roundness of the seal ring disappears. Meanwhile, in a usage state in which a low hydraulic pressure is applied or no hydraulic pressure is applied as in the speed reducer, the seal ring is not pressed against the inner peripheral surface of the shaft hole and thus, the space on the outer periphery side due to the insufficient roundness of the seal ring is not eliminated.

Thus, the seal ring used under an environment with a low-pressure as in the speed reducer of the motor mechanism of the EV or the like has been required to have a structure capable of suppressing generation of the space between the inner peripheral surface of the shaft hole and the outer peripheral surface of the seal ring due to the insufficient roundness of the seal ring.

The present invention has been made in view of the aforementioned problem, and it is an object of the present invention to provide a sealing structure capable of suppressing generation of a space between an inner peripheral surface of a shaft hole and an outer peripheral surface of a seal ring.

### Solution to Problem

To achieve the aforementioned object, a sealing structure according to the present invention is a sealing structure to seal an annular space between a shaft and a shaft hole into which the shaft is inserted, characterized in that the sealing structure includes: an annular seal ring around an axis line attached to a groove of the shaft; and a locked portion formed on a bottom surface of the groove of the shaft, in which the seal ring has a locking portion formed on an inner peripheral surface, and the locking portion and the locked portion are formed so as to be lockable with each other and formed such that the seal ring is pressed toward an outer periphery side when the locking portion and the locked portion are locked with each other.

In the sealing structure according to one aspect of the present invention, the locking portion includes at least one projection projecting toward the inner periphery side, and the locked portion includes a groove recessed toward the inner periphery side, the groove being the same as the projection in number, and the groove is formed so as to be able to accommodate the projection.

In the sealing structure according to one aspect of the present invention, a diameter of a portion of the projection projecting the most toward the inner periphery side is smaller than a diameter of an outer peripheral surface of the shaft.

In the sealing structure according to one aspect of the present invention, a thickness in the radial direction of the seal ring in the portion of the projection projecting the most toward the inner periphery side is greater than a length in the radial direction between the outer peripheral surface of the shaft and an inner peripheral surface of the shaft hole.

### Effects of Invention

According to a sealing structure according to the present invention, generation of a space between an inner peripheral surface of a shaft hole and an outer peripheral surface of a seal ring can be suppressed.

### Brief Description of Drawings

[Fig. 1] A cross-sectional view of a cross section orthogonal to an axis line, showing a schematic configuration of a sealing structure according to an embodiment of the present invention.
[Fig. 2] A cross-sectional view of a cross section along the axis line, showing the schematic configuration of the sealing structure according to the embodiment of the present invention.
[Fig. 3] A side view of one side, showing a schematic configuration of a seal ring of the sealing structure according to the embodiment of the present invention.
[Fig. 4] A partially enlarged perspective view showing an enlarged vicinity of a projection of the seal ring shown in Fig. 3.
[Fig. 5] A partially enlarged perspective view showing an enlarged vicinity of a joint portion of the seal ring shown in Fig. 3.
[Fig. 6] A cross-sectional view of a groove of a shaft in which a locked portion is formed and a shaft hole into which the shaft is inserted of the sealing structure according to the embodiment of the present invention.
[Fig. 7] A partial cross-sectional view showing an enlarged vicinity of the projection and a locking groove of the sealing structure in an attachment state.
[Fig. 8] A partial cross-sectional view showing an enlarged vicinity of the projection and the locking groove of the sealing structure, showing a state of the projection and the locking groove contacting each other in a usage state while the shaft is rotating.
[Fig. 9] A partial cross-sectional view showing an enlarged vicinity of the projection and the locking groove of the sealing structure, showing a state of the projection and the locking groove locked with each other in a usage state while the shaft is rotating.
[Fig. 10] A partial cross-sectional view of a cross section orthogonal to the axis line, showing a modification of the projection and the locking groove of the seal ring of the sealing structure shown in Fig. 1.
[Fig. 11] A partial cross-sectional view of a cross section orthogonal to the axis line, showing another modification of the projection and the locking groove of the seal ring of the sealing structure shown in Fig. 1.

### Description of Embodiments

Hereinafter an embodiment of the present invention will be described with reference to the drawings.

A sealing structure 1 according to the present embodiment is a sealing device to seal an annular space between a shaft and a shaft hole into which the shaft is inserted. The sealing structure 1 is used to perform sealing, in a vehicle or general-purpose machinery, between the shaft and the shaft hole into which the shaft is inserted that mutually relatively rotate, the shaft hole being formed in a housing or the like. The sealing structure 1 is used, for example, in a speed reducer of a motor mechanism of an EV or a HEV, an AT, or a CTV. The sealing structure 1 is preferably used in a speed reducer of a motor mechanism or the like in which the internal hydraulic pressure is low. Note that the target (target for attachment) to which the sealing structure 1 of the embodiment of the present invention is applied is not limited to the aforementioned target.

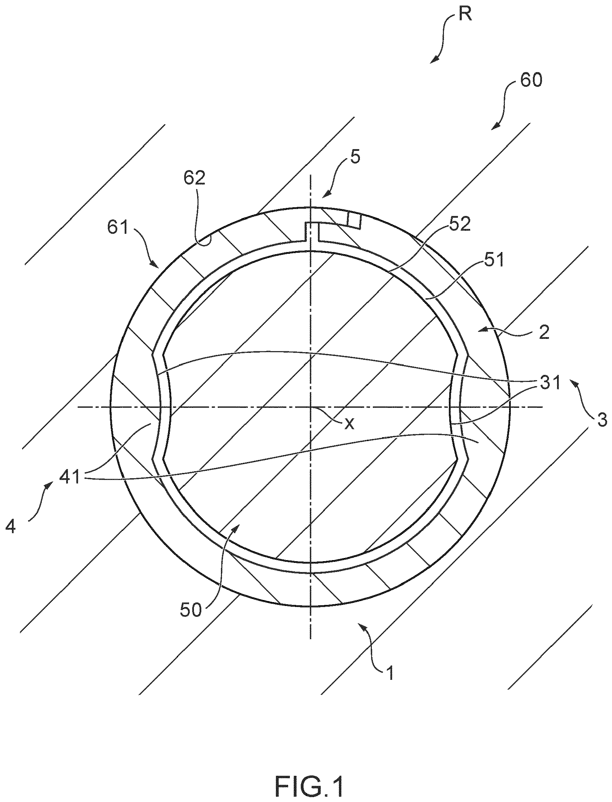

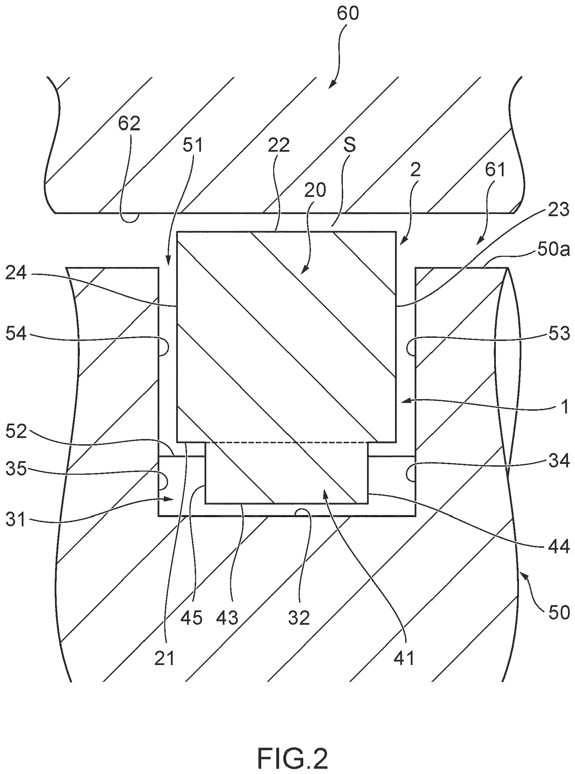

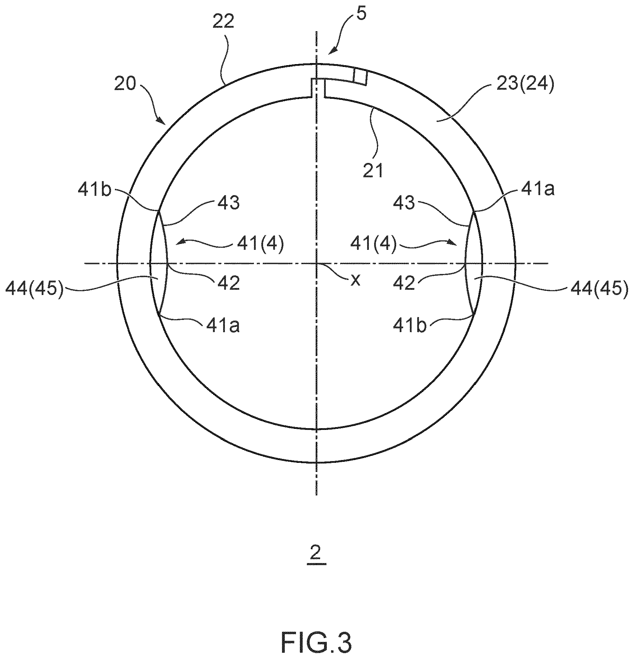

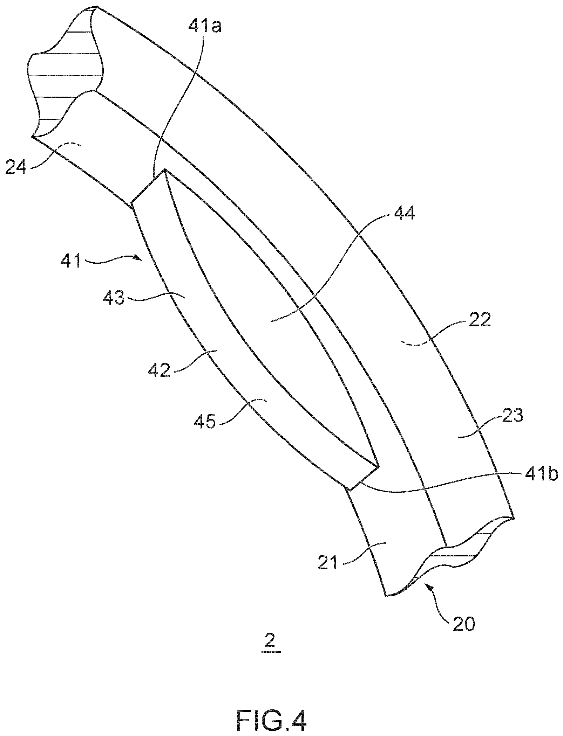

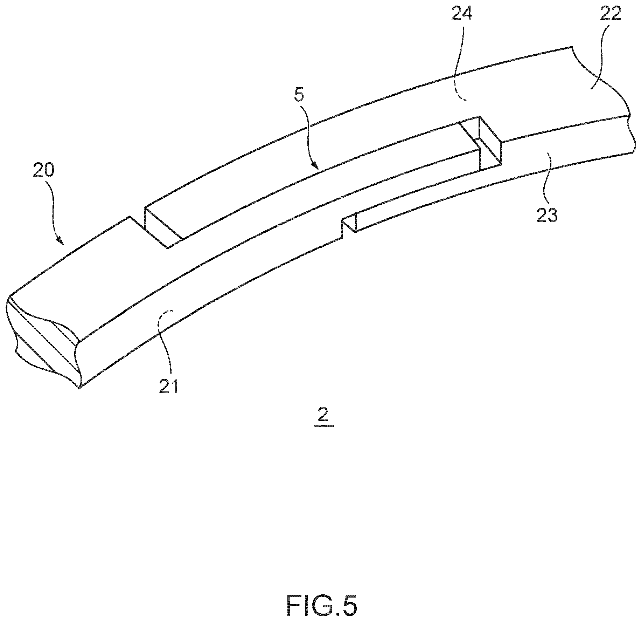

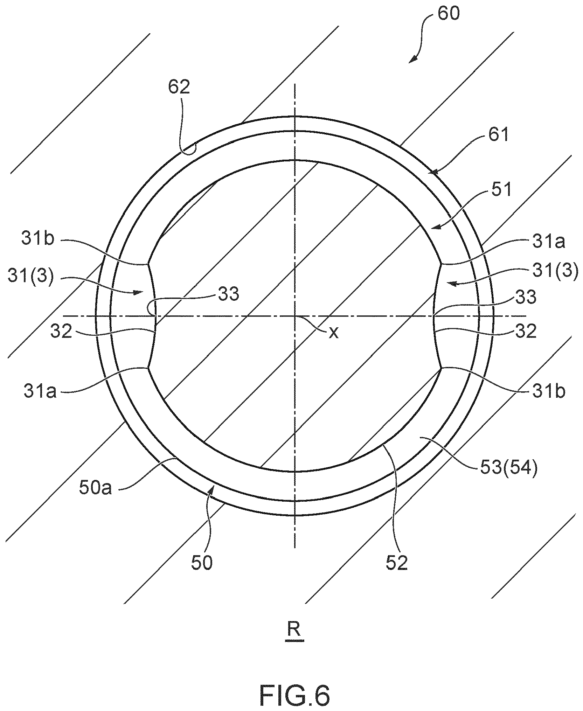

Fig. 1 is a cross-sectional view of a cross section orthogonal to an axis line x, showing a schematic configuration of a sealing structure 1 according to an embodiment of the present invention. Fig. 2 is a cross-sectional view of a cross section along the axis line x, showing the schematic configuration of the sealing structure 1. Fig. 3 is a side view of one side, showing a schematic configuration of a seal ring 2. Fig. 4 is a partially enlarged perspective view showing the schematic configuration of the seal ring 2, and showing an enlarged vicinity of a projection 41 of the seal ring 2. Further, Fig. 5 is a partially enlarged perspective view showing the schematic configuration of the seal ring 2, and showing an enlarged vicinity of a joint portion 5 of the seal ring 2. Furthermore, Fig. 6 is a cross-sectional view of a groove 51 of a shaft 50 in which a locked portion 3 is formed and a shaft hole 61 into which the shaft 50 is inserted of the sealing structure 1. The shaft hole 61 is, for example, a housing 60 of a speed reducer R. Note that in Figs. 1-5, the seal ring 2 is shown to be in a free state without an external force applied.

As shown in Figs. 1 and 2, the sealing structure 1 includes the annular seal ring 2 around the axis line x attached to the groove 51 of the shaft 50, and the locked portion 3 formed on a bottom surface 52 of the groove 51 of the shaft 50. The seal ring 2 includes a locking portion 4 formed on an inner peripheral surface 21. The locking portion 4 and the locked portion 3 are formed to be lockable with each other, and are formed such that the seal ring 2 is pressed toward an outer periphery side when the locking portion 4 and the locked portion 3 are locked with each other. Hereinafter, the sealing structure 1 will be specifically described.

In Figs. 1 and 2, the seal ring 2 is shown to be in an attachment state, which is a natural state, in a state in which the shaft 50 is not rotating. Further, in Figs. 1 and 2, the locking portion 4 and the locked portion 3 are shown to be not locked with each other. In the sealing structure 1, the locking portion 4 is accommodated in the locked portion 3. Further, in the attachment state, as will be described later, a space S is formed in a part between the seal ring 2 and the shaft hole 61 in some cases.

As shown in Fig. 3, the seal ring 2 includes a main body portion 20. The main body portion 20 is a portion annularly extending around the axis line x, having a cross section of a surface along the axis line x in a rectangular or a substantially rectangular shape, and includes the inner peripheral surface 21 that is a surface facing the inner periphery side, an outer peripheral surface 22 that is a surface facing the outer periphery side, and side surfaces 23 and 24 oppositely facing each other. The inner peripheral surface 21 and the outer peripheral surface 22 oppositely face each other and the side surfaces 23 and 24 are surfaces facing in the axis line x direction. The inner peripheral surface 21 is, for example, a cylindrical surface or a substantially cylindrical surface about or substantially about the axis line x, and the outer peripheral surface 22 is, for example, a cylindrical surface or a substantially cylindrical surface about or substantially about the axis line x. The side surfaces 23 and 24 lie between the inner peripheral surface 21 and the outer peripheral surface 22. The side surfaces 23 and 24 are, for example, annular surfaces lying as planar or substantially planar surfaces orthogonal or substantially orthogonal to the axis line x.

The seal ring 2 is not endless, but is divided at one point in the circumferential direction, and as shown in Figs. 3 and 5, the divided portions are provided with a joint portion 5. The joint portion 5 is in a known structure that allows a stable sealing property to be maintained even when the perimeter of the seal ring 2 changes due to thermal expansion or thermal shrinkage of the seal ring 2 or the like. The structure of the joint portion 5 includes, for example, as shown in Fig. 5, a so-called specially stepped-cut structure that is cut in steps as viewed from any of the outer peripheral surface 22 side and both the side surfaces 23 and 24, a straight cut structure, a bias-cut structure, and a step-cut structure.

Further, as described above, the seal ring 2 is provided with the locking portion 4, and as shown in Figs. 1-4, the locking portion 4 includes at least one projection 41 projecting toward the inner periphery side. In the present embodiment, the seal ring 2 includes two projections 41. In the seal ring 2 in a free state, the diameter of an apex 42 that is a portion projecting the most toward the inner periphery side of each projection 41 is smaller than the diameter of an outer peripheral surface 50a of the shaft 50. Further, the thickness in the radial direction of the seal ring 2 in the apex 42 of the projection 41 is greater than the length (width) in the radial direction between the outer peripheral surface 50a of the shaft 50 and the inner peripheral surface 62 of the shaft hole 61.

As shown in Fig. 4, the projection 41 is a portion extending along the inner peripheral surface 21 in a part in a direction (circumferential direction) in which the inner peripheral surface 21 of the main body portion 20 extends, and is a portion projecting from the inner peripheral surface 21. The projection 41 includes a locking surface 43 that is a surface facing the inner periphery side. The locking surface 43 is, for example, a curved surface projecting toward the inner periphery side and is a gradually curved surface that is raised in height in the radial direction from the inner peripheral surface 21 as the locking surface 43 is distanced further from each of ends 41a and 41b in the circumferential direction of the projection 41 toward the apex 42.

Further, as shown in Figs. 2 and 4, the width in the axis line x direction of the projection 41 is smaller than the width in the axis line x direction of the main body portion 20 and the side surfaces 44 and 45 that are the surfaces facing in the axis line x direction of the projection 41 are not flush with their respective side surfaces 23 and 24 of the main body portion 20, with steps formed between the side surfaces 44 and 45 and their respective side surfaces 23 and 24. Note that the side surfaces 44 and 45 of the projection 41 may be flush with their respective side surfaces 23 and 24 of the main body portion 20, and a flush surface may be formed by either the side surface 44 of the projection 41 and the side surface 23 of the main body portion 20 or the side surface 45 of the projection 41 and the side surface 24 of the main body portion 20.

Furthermore, the two projections 41 are provided in, for example, symmetrical positions in the seal ring 2, and are specifically provided in positions at the same or substantially the same distance from the joint portion 5 or at the same or substantially the same angle on the inner peripheral surface 21 of the main body portion 20, as shown in Fig. 3. The positions where the projections 41 are provided in the seal ring 2 may preferably be positions to effectively eliminate or reduce the space S between the outer peripheral surface 22 of the seal ring 2 and the inner peripheral surface 62 of the shaft hole 61, which is formed due to the insufficient roundness of the seal ring 2, in the attachment state, as will be described later.

The seal ring 2 is formed of a resin material, such as polyether ether ketone (PEEK), polyphenylene sulfide (PPS), polyether ether ketone (PEEK), polyphenylene sulfide (PPS), or polytetrafluoroethylene (PTFE), through injection molding. Through injection molding, the seal ring 2 is molded in a state with the joint portion 5 expanded. Therefore, a molded body molded through the injection molding is subjected to correction (diameter reduction) processing so that the seal ring 2 has a desired diameter. Through the correction processing, the molded body has a reduced diameter and is corrected to form the seal ring 2 such that the seal ring 2 has a desired roundness and in the attachment state, the outer peripheral surface 22 of the seal ring 2 contacts the inner peripheral surface 62 of the shaft hole 61 entirely in the circumferential direction.

As described above, the bottom surface 52 of the groove 51 of the shaft 50, where the seal ring 2 is accommodated and attached, is provided with the locked portion 3, and as shown in Figs. 1, 2, and 6, the locked portion 3 includes locking grooves 31 that are grooves recessed toward the inner periphery side, the locking grooves 31 being the same as the projections 41 in number. In other words, in the present embodiment, two locking grooves 31 are formed on the bottom surface 52 of the groove 51. The locking grooves 31 are formed so as to be able to accommodate the projections 41. In other words, as shown in Fig. 1, the locking grooves 31 are formed such that the two projections 41 are accommodated in their respective locking grooves 31 in the attachment state. Specifically, the locking grooves 31 are provided in positions on the bottom surface 52 of the groove 51 so as to have the same positional relation as the positional relation of the projections 41 with respect to the axis line x, and the angle distance around the axis line x of the projections 41 and the angle distance around the axis line x of the locking grooves 31 are the same or substantially the same.

As shown in Fig. 6, the locking groove 31 extends along the bottom surface 52 in a part in a direction (circumferential direction) in which the bottom surface 52 of the groove 51 of the shaft 50 extends, and the locking groove 31 includes the locked surface 32 that is a surface facing the outer periphery side. The locked surface 32 is, for example, a curved surface recessed toward the inner periphery side and a gradually curved surface with the depth in the radial direction from the bottom surface 52 becoming deeper, as the locked surface 32 is distanced further from each of ends 31a and 31b in the circumferential direction toward the bottom portion 33. Further, as shown in Fig. 1, the locked surface 32 of the locking groove 31 is a more gradual surface than the locking surface 43 of the projection 41, and for example, the curvature of the locked surface 32 is smaller than the curvature of the locking surface 43. In addition, the locked surface 32 extends longer than the locking surface 43 in the circumferential direction. Note that the locked surface 32 may not be a more gradual surface than the locking surface 43 and the locked surface 32 may not extend longer than the locking surface 43 in the circumferential direction.

Further, as described above, the locking groove 31 can accommodate the projection 41, and the width in the axis line x direction of the locking groove 31 is set so as to be able to accommodate the projection 41. For example, as shown in Fig. 2, the width in the axis line x direction of the locking groove 31 is greater than the width in the axis line x direction of the projection 41. Furthermore, as shown in Fig. 2, the width in the axis line x direction of the locking groove 31 is the same as the width in the axis line x direction of the bottom surface 52 of the groove 51, and the side surfaces 34 and 35 that are surfaces facing in the axis line x direction of the locking groove 31 are respectively flush with the side surfaces 53 and 54 of the groove 51. Note that the width in the axis line x direction of the locking groove 31 may be smaller than the width in the axis line x direction of the bottom surface 52 of the groove 51, and steps may be formed between the side surfaces 34 and 35 and their respective side surfaces 53 and 54, and further, one side may be a flush surface formed by either the side surface 34 of the locking groove 31 and the side surface 53 of the groove 51 or the side surface 35 of the locking groove 31 and the side surface 54 of the groove 51, and the other side may form a step.

As described above, in the seal ring 2 in a natural state, the diameter of the apex 42 of the projection 41 is smaller than the diameter of the outer peripheral surface 50a of the shaft 50. Further, as shown in Fig. 1, in a state in which the apex 42 of the projection 41 and the bottom portion 33 of the locking groove 31 overlap with each other in the radial direction, the space is generated between the apex 42 and the bottom portion 33. Therefore, in the attachment state, the seal ring 2 can rotationally move around the axis line x. Note that as long as the seal ring 2 can rotationally move around the axis line x in the attachment state, in the state in which the apex 42 of the projection 41 and the bottom portion 33 of the locking groove 31 overlap with each other in the radial direction, the apex 42 and the bottom portion 33 may contact each other. However, as described above, the thickness in the radial direction of the seal ring 2 in the apex 42 of the projection 41 is greater than the length (width) in the radial direction between the outer peripheral surface 50a of the shaft 50 and the inner peripheral surface 62 of the shaft hole 61, and the seal ring 2 cannot rotationally move around the axis line x until the projection 41 exits from the locking groove 31. In other words, when the seal ring 2 rotationally moves around the axis line x from the position where the apex 42 of the projection 41 and the bottom portion 33 of the locking groove 31 overlap with each other in the radial direction, the locking surface 43 of the projection 41 contacts the locked surface 32 of the locking groove 31 in the overlapping position in the radial direction, and the outer peripheral surface 22 of the seal ring 2 contacts the inner peripheral surface 62 of the shaft hole 61, so that the projection 41 and the locking groove 31 are locked with each other, thereby disabling further rotational movement of the seal ring 2.

Thereafter, the function of the sealing structure 1 having the aforementioned configuration will be described.

As described above, the seal ring 2 is injection-molded from a resin material and is formed through the subsequent correction processing. There are some cases in which even through such correction processing, for example, the joint portion 5 or a portion in the vicinity of the joint portion 5 are not formed so as to realize a desired diameter, resulting in the insufficient roundness of the outer peripheral surface 22 of the seal ring 2 in some cases. In other words, in the aforementioned attachment state, the outer peripheral surface 22 of the seal ring 2 does not contact the inner peripheral surface 62 of the shaft hole 61 entirely in the circumferential direction, and a part of the outer peripheral surface 22, for example, the joint portion 5 or the portion in the vicinity of the joint portion 5 does not contact the inner peripheral surface 62 of the shaft hole 61, and in this portion, the space S is generated between the outer peripheral surface 22 of the seal ring 2 and the inner peripheral surface 62 of the shaft hole 61 in some cases (see Fig. 2). In the following descriptions of the function, the portion in the vicinity of the joint portion 5 does not contact the inner peripheral surface 62 of the shaft hole 61 due to the insufficient roundness of the seal ring 2, and the space S is generated between the outer peripheral surface 22 of the seal ring 2 and the inner peripheral surface 62 of the shaft hole 61 in this portion, in the attachment state.

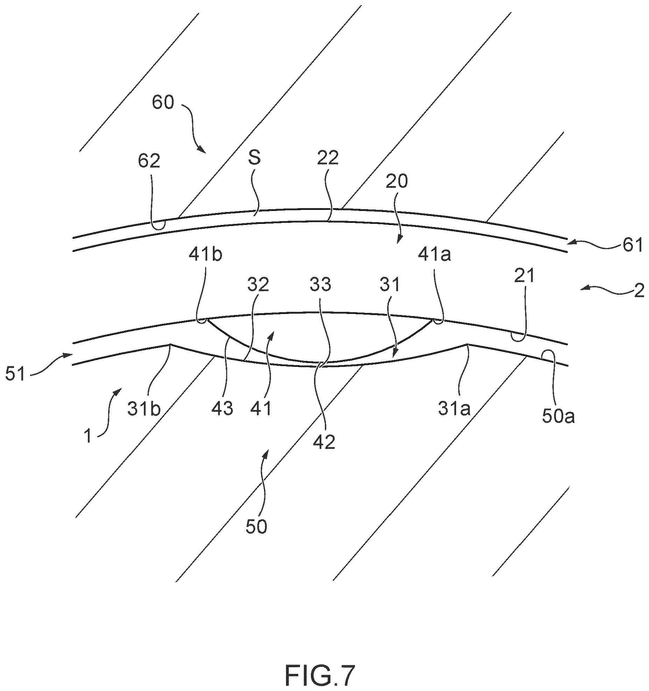

Fig. 7 is a partial cross-sectional view showing an enlarged vicinity of the projection 41 and the locking groove 31 of the sealing structure 1 in the attachment state shown in Fig. 1. As described above, in the sealing structure 1, a space is generated between the apex 42 and the bottom portion 33 in the state in which the apex 42 of the projection 41 and the bottom portion 33 of the locking groove 31 overlap with each other in the radial direction in the attachment state, as shown in Fig. 7. Further, the portion in the vicinity of the joint portion 5 of the outer peripheral surface 22 of the seal ring 2 does not contact the inner peripheral surface 62 of the shaft hole 61 due to the insufficient roundness of the seal ring 2, so that in this portion, the minute space S is generated between the outer peripheral surface 22 of the seal ring 2 and the inner peripheral surface 62 of the shaft hole 61.

In a usage state of the speed reducer R, when the shaft 50 is rotated, since the outer peripheral surface 22 of the seal ring 2 and the inner peripheral surface 62 of the shaft hole 61 contact each other, except for a part, the seal ring 2 rotationally moves relative to the shaft 50 from the attachment state shown in Fig. 7 by a frictional force on the seal ring 2 caused by contact between the outer peripheral surface 22 and the inner peripheral surface 62. By the relative rotation, the space between the locking surface 43 of the projection 41 and the locked surface 32 of the locking groove 31 is reduced, so that the locking surface 43 of the projection 41 and the locked surface 32 of the locking groove 31 contact each other. At this time, the seal ring 2 is still in the natural state.

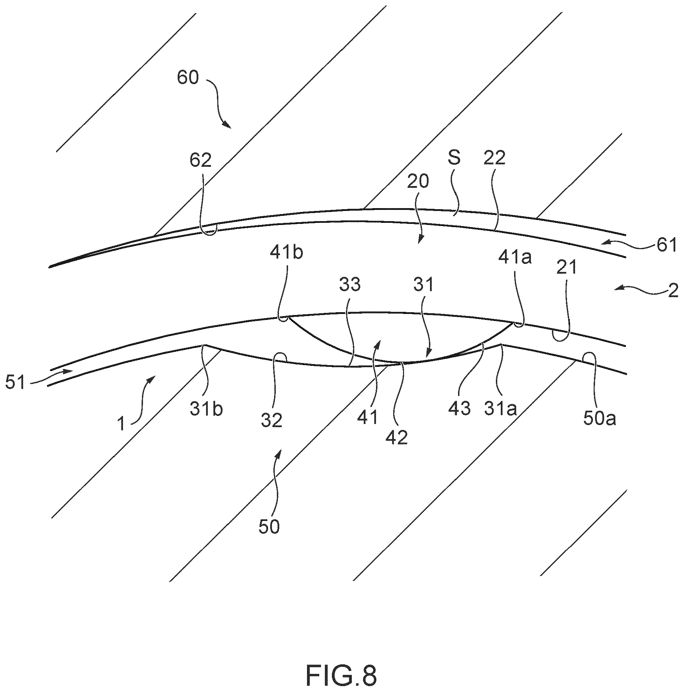

Then, when the seal ring 2 further rotationally moves relative to the shaft 50, as shown in Fig. 8, the position where the locking surface 43 of the projection 41 and the locked surface 32 of the locking groove 31 contact each other approaches the end 31a in the circumferential direction of the locking groove 31 that is the opposite side in the rotating direction of the shaft 50 and the projection 41 ascends the locked surface 32, so that the projection 41 is pushed up toward the outer periphery side along the curved surface of the locked surface 32. Therefore, a force to push up the main body portion 20 toward the outer periphery side is applied to a part of the main body portion 20 of the seal ring 2 so that the part of the outer peripheral surface 22 of the main body portion 20 is pushed up. In this manner, the minute space S between the outer peripheral surface 22 of the seal ring 2 and the inner peripheral surface 62 of the shaft hole 61 is reduced.

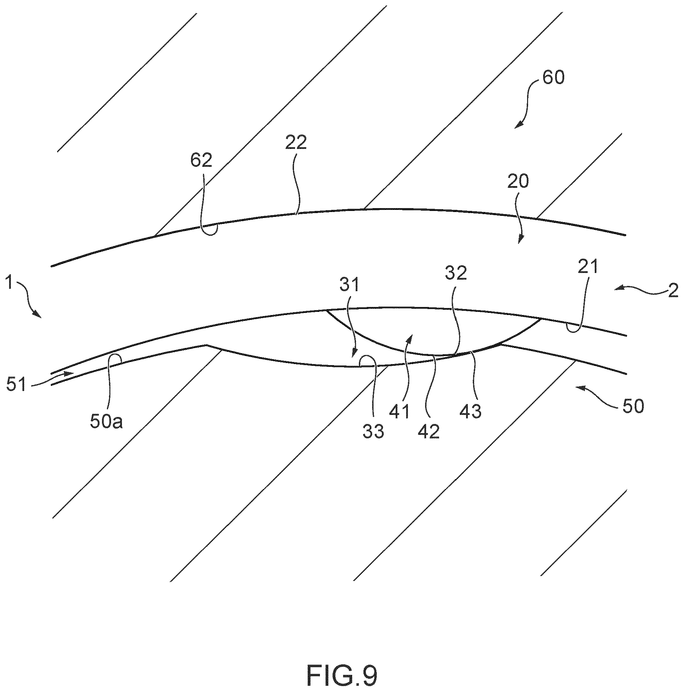

Then, the seal ring 2 further rotationally moves relative to the shaft 50, the projection 41 further ascends the locked surface 32, so that the projection 41 is further pushed up toward the outer periphery side along the curved surface of the locked surface 32. Further, as shown in Fig. 9, in the position where the locking surface 43 of the projection 41 and the outer peripheral surface 22 of the seal ring 2 overlap with each other in the radial direction, the locking surface 43 of the projection 41 contacts the locked surface 32 of the locking groove 31 and the outer peripheral surface 22 of the seal ring 2 contacts the inner peripheral surface 62 of the shaft hole 61, so that the projection 41 and the locking groove 31 are locked with each other, thereby disabling the rotation of the seal ring 2 in the circumferential direction relative to the shaft 50. In other words, the seal ring 2 rotates together with the shaft 50.

At this time, the state is that the projection 41 ascends the locked surface 32 from the bottom portion 33 to the highest position in the radial direction and the projection 41 is pushed up to the maximum toward the outer periphery side by the curved surface of the locked surface 32. Therefore, a part of the outer peripheral surface 22 of the main body portion 20 of the seal ring 2 is brought into a state of being pushed up to the maximum toward the outer periphery side, and thus, the minute space S between the outer peripheral surface 22 of the seal ring 2 and the inner peripheral surface 62 of the shaft hole 61 that has been generated in the attachment state is minimized. In the example of Fig. 9, the minute space S between the outer peripheral surface 22 of the seal ring 2 and the inner peripheral surface 62 of the shaft hole 61 that has been generated in the attachment state disappears. Thus, leakage of oil in the speed reducer or the entry of foreign objects into the speed reducer from the outside caused by the minute space S between the outer peripheral surface 22 of the seal ring 2 and the inner peripheral surface 62 of the shaft hole 61 is prevented.

As described above, in the sealing structure 1, with a slight rotation of the shaft 50 of the speed reducer R in the usage state, the projection 41 relatively moves inside the locking groove 31 in the rotational direction and the projection 41 ascends the locked surface 32 of the locking groove 31 so that the part of the main body portion 20 of the seal ring 2 is pushed up toward the outer periphery side. Thus, the main body portion 20 of the seal ring 2 deforms in such a manner that the outer peripheral surface 22 of the seal ring 2 is pressed against the inner peripheral surface 62 of the shaft hole 61 entirely in the circumferential direction, so that the minute space S between the outer peripheral surface 22 of the seal ring 2 and the inner peripheral surface 62 of the shaft hole 61 generated in the attachment state disappears or is reduced. The sealing structure 1 can also produce the effect of removing the space S even under an environment with no pressure or a low pressure, as described above, regardless of the scale of the hydraulic pressure applied to the seal ring 2. Therefore, regardless of the target for attachment, the sealing structure 1 can remove or reduce the space S due to the insufficient roundness of the seal ring 2.

In this manner, according to the sealing structure 1 according to the embodiment of the present invention, the generation of the space between the inner peripheral surface 62 of the shaft hole 61 and the outer peripheral surface 22 of the seal ring 2 can be suppressed.

As described above, in a usage state, the projection 41 relatively moves inside the locking groove 31, and the projection 41 ascends the locked surface 32 of the locking groove 31 to push up the corresponding portion of the main body portion 20 of the seal ring 2 toward the outer periphery side, so that the minute space S between the outer peripheral surface 22 of the seal ring 2 and the inner peripheral surface 62 of the shaft hole 61 is removed or reduced. Thus, a form of the projection 41 and the locking groove 31 such as the number, the position, and the shape are each set in accordance with the generation state of the space S that is desired to be removed between the outer peripheral surface 22 of the seal ring 2 and the inner peripheral surface 62 of the shaft hole 61. Specifically, the portion and the amount of the main body portion 20 to be pushed up and a form of deformation of the seal ring 2 at this time vary depending on the position of the projection 41. Therefore, it is preferable to set the position where the projection 41 is provided on the inner peripheral surface 21 of the seal ring 2 or the number of the projections 41 in accordance with the desired portion and amount of the main body portion 20 to be pushed up and the desired form of deformation of the seal ring 2. Further, the portion and the amount of the main body portion 20 to be pushed up and the form of deformation of the seal ring 2 at this time may also vary depending on the shape of the locking surface 43 of the projection 41 and the shape of the locked surface 32 of the locking groove 31. Therefore, it is preferable to set the shape of the locking surface 43 of the projection 41 and the shape of the locked surface 32 of the locking groove 31 in accordance with the desired portion and amount of the main body portion 20 to be pushed up and the desired form of deformation of the seal ring 2.

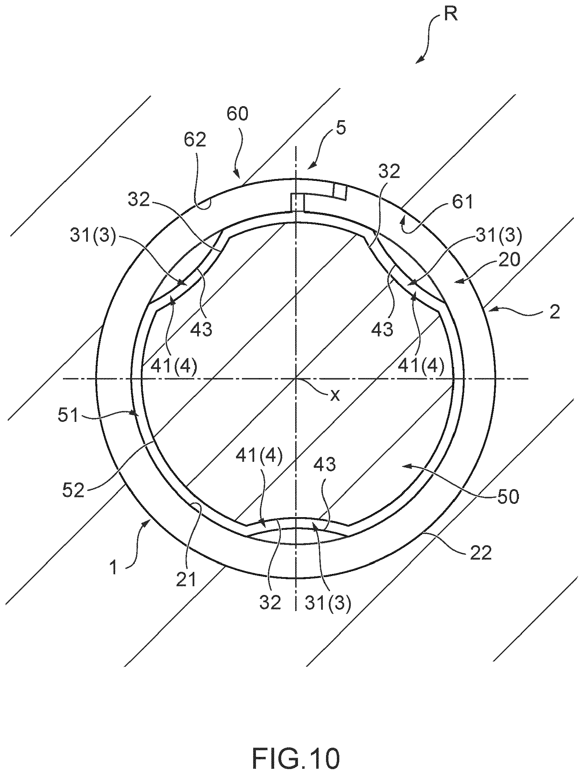

For example, as shown in Fig. 10, the seal ring 2 may be provided with three projections 41, and the bottom surface 52 of the groove 51 of the shaft 50 may be correspondingly provided with three locking grooves 31. In this case, in the seal ring 2, two of the projections 41 are provided in the positions symmetrical about the joint portion 5 and one of the projections 41 is provided so as to face the joint portion 5. The locking grooves 31 are provided in the positions respectively corresponding to the projections 41.

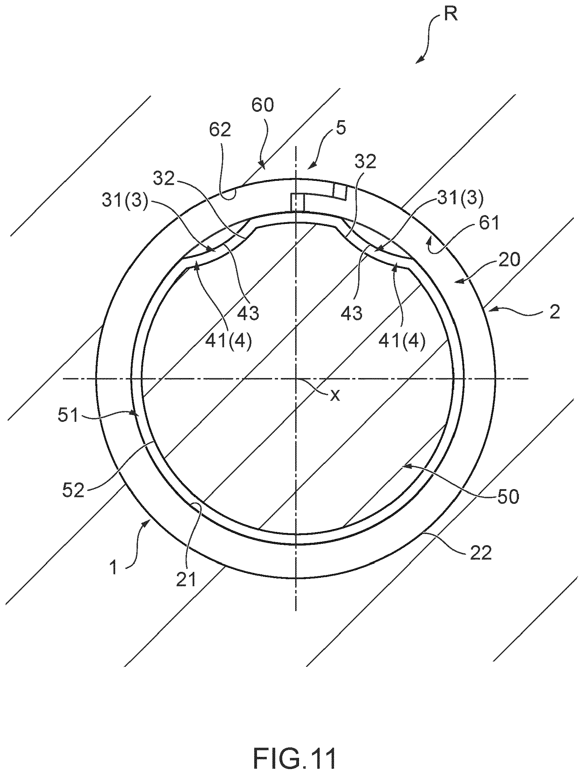

Further, as shown in Fig. 11, the seal ring 2 may be provided with two projections 41, and the bottom surface 52 of the groove 51 of the shaft 50 may be correspondingly provided with two locking grooves 31. In this case, in the seal ring 2, the two projections 41 are provided in the positions symmetrical or substantially symmetrical about the joint portion 5 and are provided in the vicinity of the joint portion 5. The locking grooves 31 are provided in the positions respectively corresponding to the projections 41. For example, the projection 41 and the locking groove 31 are each provided in the positions at an angle closer than 45° from the joint portion 5 on the inner peripheral surface 21 of the main body portion 20. In the vicinity of the joint portion 5, the space S tends to be generated between the outer peripheral surface 22 of the seal ring 2 and the inner peripheral surface 62 of the shaft hole 61. Therefore, when the projection 41 and the locking groove 31 are provided in the vicinity of the joint portion 5 and symmetrically about the joint portion 5, the space S generated in the vicinity of the joint portion 5 can be reduced or eliminated, so that the effect of suppressing the generation of the space S between the peripheral surface 22 of the seal ring 2 and the inner peripheral surface 62 of the shaft hole 61 can be enhanced.

Further, in the description of the function of the aforementioned sealing structure 1, in the seal ring 2, due to the insufficient roundness, the minute space S is generated between the outer peripheral surface 22 of the seal ring 2 and the inner peripheral surface 62 of the shaft hole 61 in the attachment state, but even when the seal ring 2 is formed so as to have a desired roundness, the sealing structure 1 can be used such that the sealing structure 1 functions as in the same manner as the aforementioned sealing structure 1. For example, even when the seal ring 2 is formed in a desired shape (round or the like), the minute space S is occasionally generated between the outer peripheral surface 22 of the seal ring 2 and the inner peripheral surface 62 of the shaft hole 61 depending on the shape of the inner peripheral surface 62 of the shaft hole 61. In this case also, the sealing structure 1 functions as described above to be able to reduce or eliminate the space S. Further, also in a case where the seal ring 2 and the inner peripheral surface 62 of the shaft hole 61 are formed in a desired shape, the sealing structure 1 functions as described above to be able to improve the sealing property. The sealing structure 1 can also suppress the generation of the space between the outer peripheral surface 22 of the seal ring 2 and the inner peripheral surface 62 of the shaft hole 61 due to abrasion of the outer peripheral surface 22 of the seal ring 2 or the inner peripheral surface 62 of the shaft hole 61.

The embodiment of the present invention has been described above, but the present invention is not limited to the sealing structure 1 according to the aforementioned embodiment of the present invention and encompasses any aspects included in the scope of the concept and the claims of the present invention. Further, the configurations may be selectively combined, as appropriate, so as to produce at least part of the aforementioned problems and effects. For example, the shape, the material, the arrangement, the size, and the like of the constituent elements in the aforementioned embodiment may appropriately be changed in accordance with the specific use aspect of the present invention.

For example, the locking surface 43 of the projection 41 and the locked surface 32 of the locking groove 31 are not limited to a curved surface, but may be a planar surface, a combination of planar surfaces, a combination of a curved surface and a planar surface, or the like. Further, a plurality of grooves extending in the circumferential direction may be formed on the outer peripheral surface 22 of the seal ring 2 so as to produce a dynamic pressure effect.

### List of Reference Signs

1 sealing structure
2 seal ring
3 locked portion
4 locking portion
5 joint portion
20 main body portion
21 inner peripheral surface
22 outer peripheral surface
23, 24 side surface
31 locking groove
31a, 31b end in circumferential direction
32 locked surface
33 bottom portion
34, 35 side surface
41 projection
41a, 41b end in circumferential direction
42 apex
43 locking surface
44, 45 side surface
50 shaft
50a outer peripheral surface
51 groove
52 bottom surface
53, 54 side surface
60 housing
61 shaft hole
62 inner peripheral surface
R speed reducer
S space
x axis line

## Claims

1. A sealing structure to seal an annular space between a shaft and a shaft hole into which the shaft is inserted, **characterized in that** the sealing structure comprises:
an annular seal ring around an axis line attached to a groove of the shaft; and
a locked portion formed on a bottom surface of the groove of the shaft,
wherein
the seal ring has a locking portion formed on an inner peripheral surface, and
the locking portion and the locked portion are formed so as to be lockable with each other and formed such that the seal ring is pressed toward an outer periphery side when the locking portion and the locked portion are locked with each other.

2. The sealing structure according to claim 1, **characterized in that**
the locking portion includes at least one projection projecting toward an inner periphery side,
the locked portion includes a groove recessed toward the inner periphery side, the groove being the same as the projection in number, and
the groove is formed so as to be able to accommodate the projection.

3. The sealing structure according to claim 2, **characterized in that** a diameter of a portion of the projection projecting most toward the inner periphery side is smaller than a diameter of an outer peripheral surface of the shaft.

4. The sealing structure according to claim 2 or 3, **characterized in that** a thickness in a radial direction of the seal ring in a portion of the projection projecting most toward the inner periphery side is greater than a length in the radial direction between an outer peripheral surface of the shaft and an inner peripheral surface of the shaft hole.
